# EUROPEAN PATENT APPLICATION

(11) **EP 4 374 681 A1**
(43) Date of publication of application: **29.05.2024**
(21) Application number: 23211393.6
(22) Date of filing: 22.11.2023
(51) Int. Cl.: A01D 46/26

(54) **APPARATUS FOR HARVESTING SMALL FRUITS**

(30) Priority: 22.11.2022 IT 202200024048
(71) Applicant: Bacci, Jacopo, 40042 Lizzano in Belvedere (BO) (IT)
(72) Inventor: Bacci, Jacopo, 40042 Lizzano in Belvedere (BO) (IT)
(74) Representative: De Milato, Francesco

(57) **Abstract**

An apparatus (1) for harvesting small fruits, in particular olive, almonds, pistachios and similar small fruits comprises a support body (10) and a first and a second oscillating comb-like member (20a,20b) pivotally connected to the support body (10) at respective fulcrum points (23a,23b). A motor group (50) is, furthermore, provided comprising a motor shaft (51) on which a pinion (52) is mounted that is operatively connected to the first and to the second oscillating comb-like member (20a,20b) by a motion transmission group (60). This provides a first and a second connecting rod member (61a,61b) having a respective first end (62a,62b) pivotally connected, respectively at a first and a second hinge point (Pia,Pib), to a respective actuation portion (31a,31b) of the elongated base portion (30a,30b), and a respective second end (63a,63b) arranged to connect the first and second connecting rod members (61a,61b), respectively, to a first and to a second crank group (65a,65b). These provide a first and a second eccentric pivot (66a,66b) which rotate integrally with a first and a second toothed wheel (64a,64b) along respective circular trajectories (130a,130b)

## Description

### Field of the invention

The present invention relates to an apparatus for harvesting small fruits, such as olives, almonds, pistachios and similar fruits.

Furthermore, the invention relates to a method for harvesting the aforementioned small fruits.

### Description of the prior art

As it is known, several apparatuses exist for shaking the branches of some plants by vibrating and/or rotating the same by rods, or bars, of which they are provided with. In this way, the aforementioned apparatuses cause the small fruits, in particular olives, but also almonds, pistachios, coffee beans, etc. to fall down from the branches of the plants, in order to allow to collect them.

An example of a similar apparatus is described in WO2007/129207. It comprises two comb-like members, each of which comprising an elongated base body and a plurality of rods which protrude from the same face. The base bodies are pivotally connected to a support by hinges having the same axis, therefore, the two comb-like members are arranged on parallel planes and facing with each other. In particular, in a determined position relative to each other they are superimposed to each other, if viewed from one side. The apparatus is provided with an electric motor which causes the two comb-like members to oscillate by a motion transmission group. More precisely, the motion transmission group is arranged to cause an alternating rotational motion in opposite phases of the two comb-like members. The apparatus provides, furthermore, a pole having a first end fixed to the support and a second end having a handle to be grasped by a user. A drawback of the apparatus described above is the small working area that is generated by the movement of the comb-like members with respect to their size.

Another example of an apparatus for harvesting is described in WO2017/002047. In this case, the two comb-like members are positioned side by side in order to have a larger working area with respect to the previous case. Also in this case, the comb-like members are operated to move according to an alternative rotational motion in opposite phases with respect to each other about a respective axis. More in detail, a motion transmission group is provided which converts the continuous rotational motion provided by a motor, at first, into a reciprocating translational motion of a shaft and, then, into the alternative rotational motion of the comb-like members by two connecting rods hinged at one side to the end, and to the other to respective elongated bases of the comb-like members.

However, this apparatus is structurally complex and too much heavy owing to the kind of transmission that is used.

Still another example of an apparatus for harvesting fruits is described in EP3430883. In this case, analogously to the previous case, the two comb-like members are positioned side by side, but the motion transmission group provides two superimposed connecting rods which are hinged, at a first end to the same eccentric pivot, and, at the other end, to a respective elongated base element of one of the two comb-like members.

A similar structural solution is also described in EP2491782. Also in this case, the apparatus for shaking comprises a motor provided with a motor shaft on which a pinion is mounted. The motor operates a toothed wheel on which is mounted a single eccentric pivot to which the ends of two rod connection members are constrained. Also in this case, the rod connection members have the ends constrained to respective comb-like members.

However, the superimposition of the two connecting rods provided by both the transmission group of EP3430883 and of EP2491782, unavoidably implies that the working head of the apparatus have a high thickness. This, in working conditions, obstructs the user's view impeding to clearly see the area involved by the shaking operation. Therefore, there is the risk to apply the shaking action with the comb-like members in areas without fruits, or even, on parts of the plant which shouldn't be involved because particularly fragile and that could, therefore, be unavoidably damaged.

Another apparatus for harvesting is described in GR1008857. In this case the apparatus comprises a first and a second oscillating member positioned side by side and respectively provided with a series of rods. The first and the second oscillating member are pivotally connected to a support body at respective fulcrum points. A motor is, furthermore, provided with a shaft on which is mounted a first gear wheel. This meshes with a second gear wheel in order to cause a rotational motion about a respective rotational shaft on which is mounted a third gear wheel. This latter, then, meshes with a fourth gear wheel connected to an end of the first connecting rod for causing the first oscillating member to oscillate. The fourth gear wheel, then, meshes with a fifth gear wheel connected to an end of the second connecting rod for causing the second oscillating member to oscillate. More precisely, the fourth and the fifth gear wheels are connected to respective ends of a respective connecting rod by a connection member comprising a respective pivot. The solution described in GR1008857 is, therefore, structurally complex in particular owing to the five gear wheels, which have problems of wear at the teeth that can cause over time the shaking action of the branches to be ineffective and, therefore, to make necessary to carry out a high number of maintenance operations to replace the same. Furthermore, also the solution of GR1008857 provides high overall dimensions not only along a plane orthogonal to the axes of the gear wheels, like the prior art solutions described above, but also to a high lateral dimension owing to the great number of gear wheels of the motion transmission group that mesh one with another with consequent problems when the apparatus is used for harvesting fruits between two branches of the plant to be shaken in particular owing to the high weight to be supported by the user. In addition to the above, the solution of GR1008857 have problems of penetration of dust, dirty, such as vegetable materials that are ground during the use of the apparatus that accumulate in particular between the fourth and the fifth gear wheel and the respective connection member providing the pivot actuating the connecting rods. Therefore, the apparatus described in GR1008857 needs to be subjected to frequent maintenance operations in order to remove by hands the external materials that, over time, accumulate between the different mechanical parts impeding the same from working correctly.

Other examples of apparatuses for harvesting having analogous drawbacks are also described in WO2022/049460, EP3834600, ES2516490.

### Summary of the invention

It is, therefore, an object of the present invention to provide an apparatus for harvesting small fruits, such as olives, almonds, pistachios and similar fruits, which allows to overcome the aforementioned drawbacks of the prior art solutions.

It is, in particular, an object of the present invention to provide such an apparatus for harvesting small fruits, such as olives, almonds, pistachios and similar fruits, having a small thickness without reducing the effectiveness of the shaking action.

It is another object of the present invention to provide such an apparatus for harvesting small fruits, such as olives, almonds, pistachios and similar fruits, that is able, on the one hand, to assure an effective shaking action over time and, on the other hand, to at least partly balance the stresses to which the motion transmission members are subjected to, in such a way to reduce the wear over time and, therefore, to reduce the number of maintenance operations that are necessary with respect to the prior art solutions.

These and other objects are achieved by an apparatus, according to the invention, for harvesting small fruits, in particular olive, almonds, pistachios and similar small fruits, said apparatus comprising:
- a manoeuvring pole provided with at least a grasping portion at which a user is adapted to grasp said manoeuvring pole;
- a support body;
- a first and a second oscillating comb-like member pivotally connected to said support body at respective fulcrum points, said first and second oscillating comb-like members being positioned side by side and comprising, respectively, a first and a second elongated base portion provided, respectively, with a first and with a second plurality of shaking rods;
- a motor group comprising a motor shaft on which a pinion operatively connected to said first and second oscillating comb-like members is mounted by a motion transmission group arranged to cause a rotation about said respective fulcrum point and comprising a first and a second connecting rod member having a respective first end pivotally connected, respectively at a first hinge point (Pia) and at a second hinge point (Pib), to a respective actuation portion of said elongated base portion, and a respective second end arranged to connect said first and second connecting rod members, respectively, to a first and to a second crank group, said first and second crank groups comprising, respectively:
- a first and a second toothed wheel arranged to rotate about a respective rotation axis;
- a first and a second eccentric pivot mounted, respectively, on said first and on said second crank group in such a way to integrally rotate with said first and with said second toothed wheel about said rotation axes along respective circular trajectories, said first and second eccentric pivots being arranged to pivotally engage with each other, respectively, in a first and in a second engagement hole provided at said second ends of said first and of said second connecting rod member, in such a way that during the rotation of said first and of said second toothed wheel said first ends of said first and of said second connecting rod member are adapted to move on a portion, respectively, of a first and of a second circular trajectory, between a respective bottom dead point (Pmi) and a respective top dead point (Pms);
whose main characteristic is that said first and second eccentric pivots are mounted, respectively, on said first and on said second crank group, in respective positions such that when said first hinge point (Pia) is positioned at said respective top dead point (Pms) of said portion of said first circular trajectory, said second hinge point (Pib) is positioned at said respective bottom dead point (Pmi) on said portion of said second circular trajectory and vice versa.

Other features of the invention and the related embodiments are set out in the dependent claims.

In particular, the positions of the first and of the second eccentric pivot, respectively on the first and on the second crank group, can be staggered with each other at a predetermined angle.

More in particular, the predetermined angle can be comprised between 170° and 190°.

Preferably, the predetermined angle is 180° when the first and the second hinge point (Pia,Pib) of the first and second connecting rod members are positioned, one at the respective bottom dead point (Pmi), and the other one at the respective top dead point (Pms).

In particular, the first and second toothed wheels of the first and second crank groups can be arranged to be counter-rotating.

More in particular, the first toothed wheel can be arranged to directly mesh with the pinion and wherein the first and second toothed wheels are arranged to mesh with each other in such a way to be counter-rotating.

In an alternative embodiment, instead, the first and second toothed wheels of the first and second crank groups are arranged to rotate in the same direction of rotation.

Advantageously, the first and second toothed wheels can be arranged to directly mesh with the pinion.

In an embodiment foreseen, the first and second crank groups can comprise a first part and a second part fixed at opposite sides to the first and to the second toothed wheel. In particular, the first parts and the second parts can be fixed at opposite sides, respectively, to the first and to the second toothed wheel by a plurality of fixing elements.

In particular, each said first part can be connected to the respective second part of the first and second crank groups at respective flanged portions.

Preferably, each said first and second part can be a closed body configured to avoid that dust, or other external impurities, can penetrate between the different parts of the first and of the second crank group.

In particular, the first parts of the first and second crank groups can be, respectively, provided with the first and the second eccentric pivot.

In particular, the aforementioned first ends of the first and of the second elongated base portion are arranged facing with each other. More in particular, the first and second elongated base portions are arranged on the same plane.

In particular, the aforementioned first and second oscillating comb-like members comprise, respectively, a first and a second directional body. More in particular, the first and second directional bodies comprise, respectively, a first and a second plurality of tubular bodies operatively connected by a plurality of connection rods, each tubular body being arranged to house and direct a respective rod along a predetermined direction.

Advantageously, the first and second pluralities of tubular bodies are arranged to be engaged, respectively, the first and second oscillating comb-like members.

According to another aspect of the invention, an apparatus for harvesting small fruits, in particular olives, almonds, pistachios and similar comprises:
- a manoeuvring pole provided with at least a grasping portion at which a user is adapted to grasp said manoeuvring pole;
- a support body;
- a first and a second oscillating comb-like member pivotally connected to said support body at respective fulcrum points, said first and second oscillating comb-like members being positioned side by side and comprising, respectively, a first and a second elongated base portion provided, respectively, with a first and with a second plurality of shaking rods;
- a motor group comprising a motor shaft on which a pinion is mounted that is operatively connected to said first and to said second oscillating comb-like member by a motion transmission group arranged to cause the same to rotate about said respective fulcrum point;
whose main characteristic is that said motor group comprises, furthermore, a speed reducer having at the inlet the aforementioned motor shaft, and at the outlet a supplementary motor shaft of a motor, and wherein the aforementioned motor and the speed reducer are configured to removably engage with each other at respective flanged portions, in such a way that is possible to easily and quickly disassemble and/or assemble the motor and the speed reducer.

In particular, the aforementioned speed reducer can be a planetary, or epicycloidal reducer.

In particular, the supplementary motor shaft can be the motor shaft of an electric motor. More in particular, the auxiliary motor shaft can end with a supplementary pinion arranged to removably mesh with the gears of the aforementioned speed reducer, for example with the planetary gears of an epicycloidal reducer, in such a way to obtain a predetermined reduction ratio.

In particular, the motion transmission group can comprise a first and a second connecting rod member having a respective first end pivotally connected, respectively at a first hinge point (Pia) and at a second hinge point (Pib), to a respective actuation portion of said elongated base portion, and a respective second end opposite to said first end, wherein at least one between said second end of said first and of said second connecting rod member is arranged to connect said first and/or said second connecting rod member to at least a crank group comprising at least one toothed wheel arranged to rotate about a rotation axis, and wherein at least one eccentric pivot is, furthermore, provided mounted on said or each toothed wheel, said or each eccentric pivot being arranged to pivotally engage in at least one of a first and a second engagement hole provided at said second ends of said first and of said second connecting rod member.

In particular, the speed reducer can be housed within a first portion of a protection carter of the apparatus within which other components of the motion transmission group are housed. Instead, the motor provided with the aforementioned supplementary motor shaft can be housed externally to the aforementioned first portion of the protection carter and internally to a second portion of the protection carter arranged to removably engage to the aforementioned first portion, for example by disassemblable engagement elements such as screws, bolts, and similar. Therefore, it is possible to reach the aforementioned motor simply disengaging the second portion from the first portion of the protection carter, and removing the motor same and the supplementary motor shaft, disengaging the aforementioned flanged portions.

In particular, the first and second connecting rod members can be configured to be, respectively, connected at a respective second end to a first and to a second crank group comprising, respectively:
- a first and a second toothed wheel arranged to rotate about a respective rotation axis;
- a first and a second eccentric pivot mounted, respectively, on said first and on said second crank group in such a way to rotate integrally with said first and second toothed wheel about said rotation axes along respective circular trajectories, said first and second eccentric pivots being arranged to pivotally engage, respectively, in a first and in a second engagement hole provided at said second ends of said first and of said second connecting rod member, in such a way that during the rotation of said first and of said second toothed wheel, said first ends of said first and of said second connecting rod member are adapted to move on a portion, respectively, of a first and of a second circular trajectory, between a respective bottom dead point (Pmi) and a respective top dead point (Pms).

### Brief description of the drawings

The invention will now be shown with the following description of its exemplary embodiments, exemplifying but not limitative, with reference to the attached drawings in which:
- Fig. 1 diagrammatically shows a side elevation perspective view of a first embodiment of an apparatus, according to the invention, for harvesting small fruits;
- Fig. 2 diagrammatically shows a plan view of the working head of the apparatus of figure 1 with the protection carter removed to show, in particular, the components of the transmission group of which is provided in a first working configuration;
- Fig. 3 diagrammatically shows a plan view of the working head of the apparatus of figure 1 with the protection carter removed to show, in particular, the components of the transmission group of which is provided in a second working configuration;
- Figures from 4 to 6 show some operating schemes of the working head of the apparatus of figure 1 in some working configurations;
- Figures from 7 to 9 show some operating schemes of the connecting rod elements of the transmission group of the figures from 4 to 6 in 3 different working configurations;

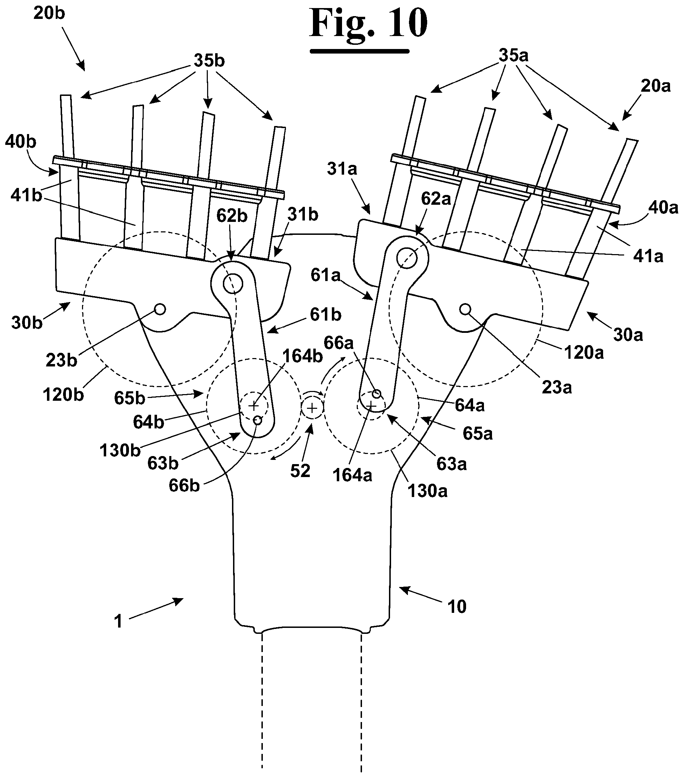

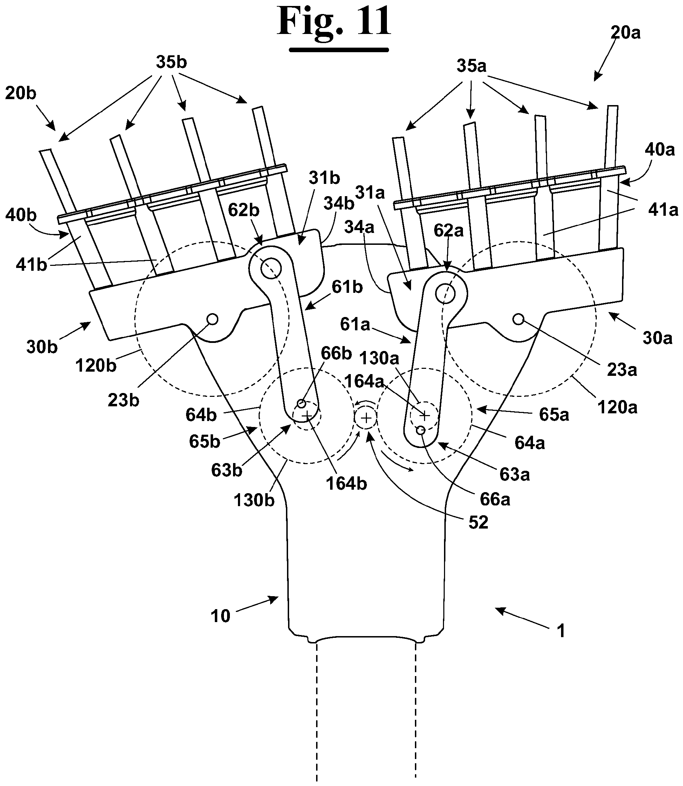

- Figures 10 and 11 show two working configurations of an embodiment alternative to that of figures from 2 to 9;

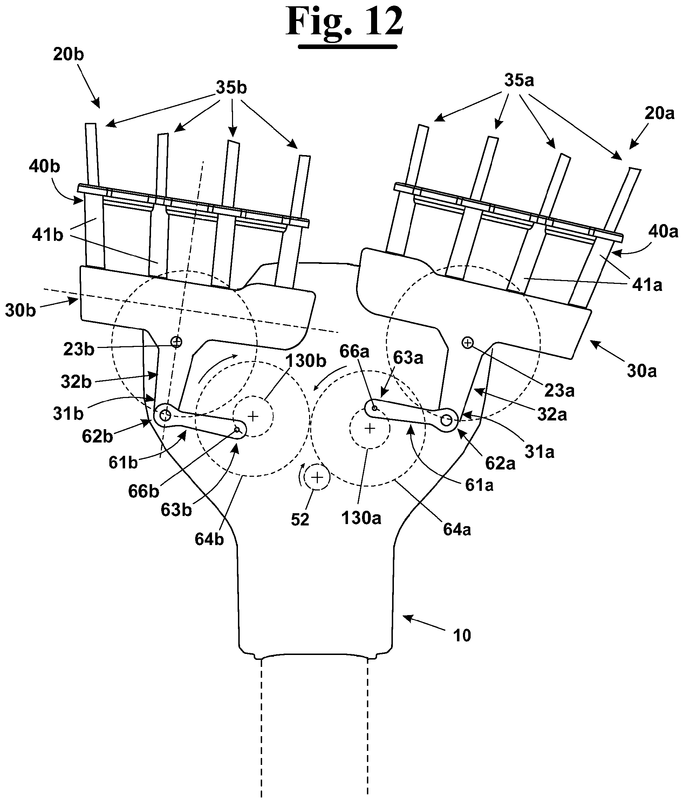

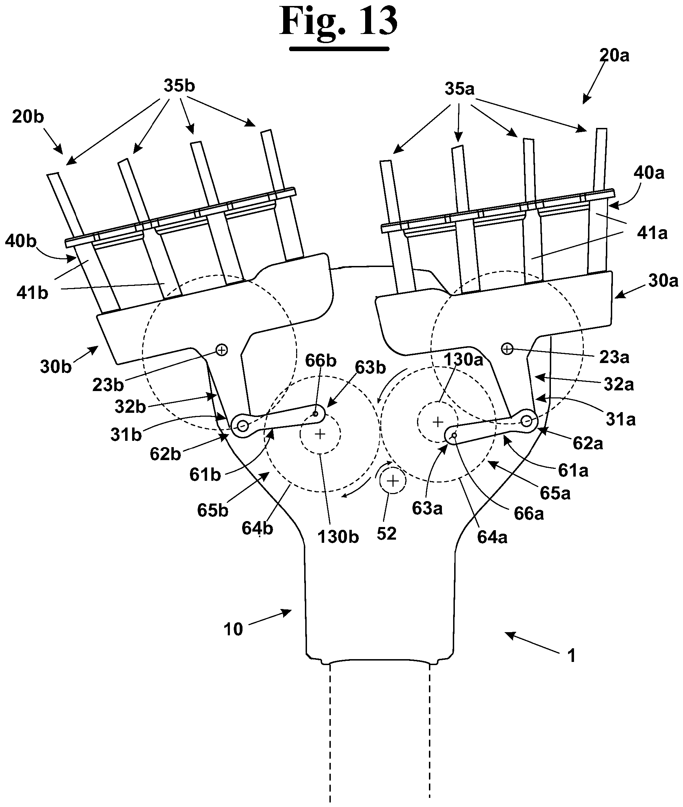

- Figures 12 and 13 show two working configurations of another embodiment alternative to that of figures from 2 to 9;

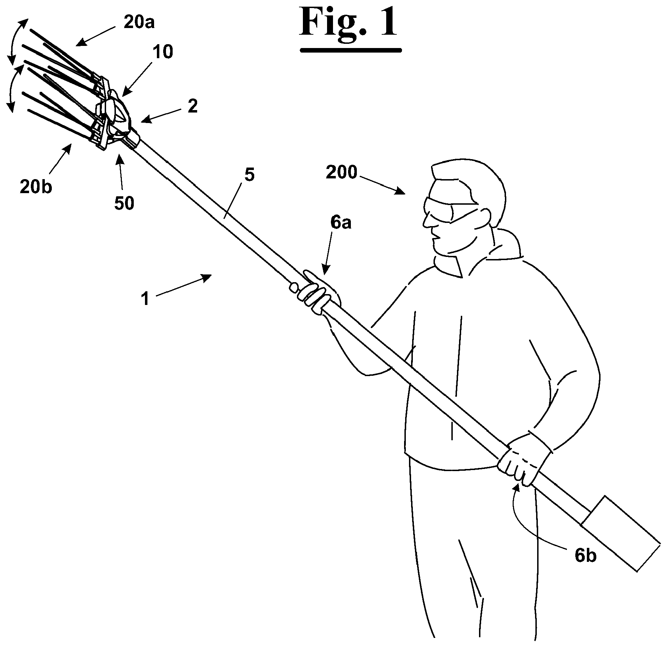

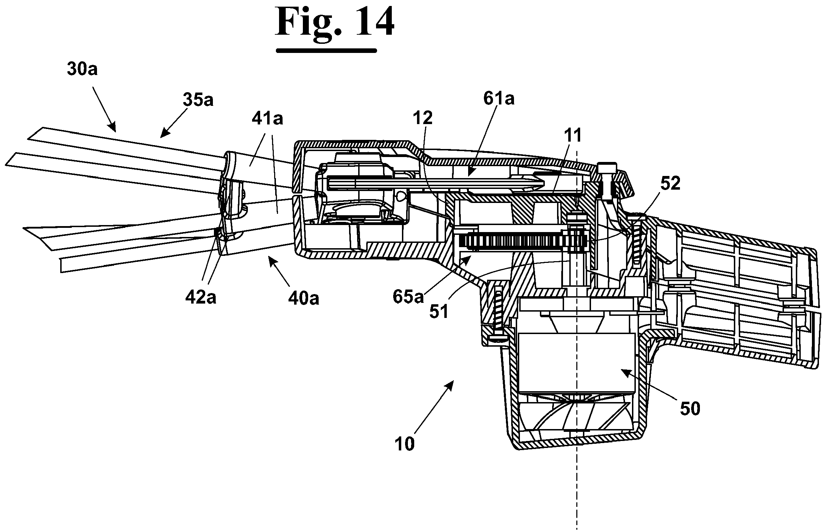

- Fig. 14 diagrammatically shows a longitudinal section view of the working head of the apparatus of figure 1;

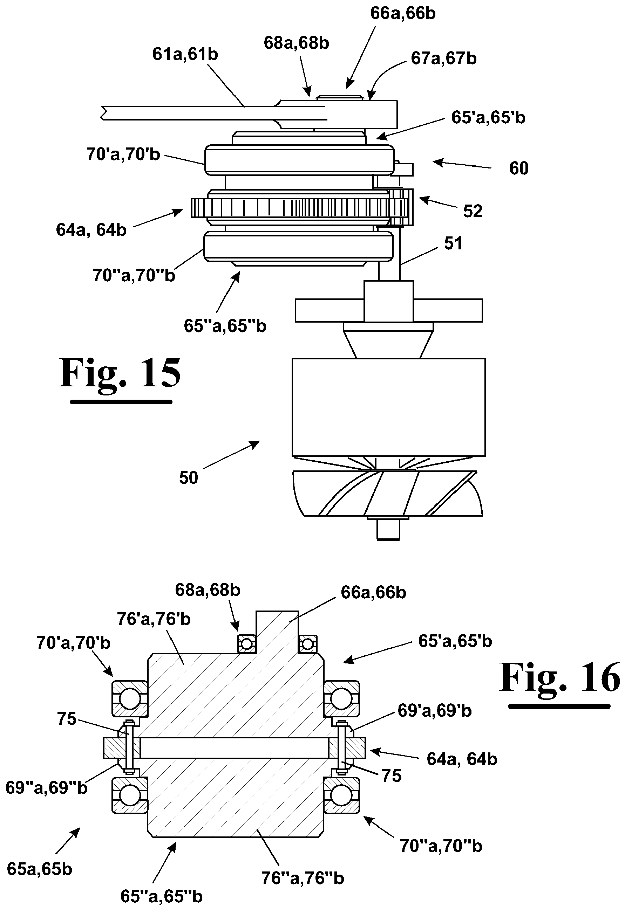

- Fig. 15 diagrammatically shows a side elevation view of an embodiment provided by the present invention of the transmission group of the apparatus for harvesting;
- Fig. 16 diagrammatically shows a transversal section view of the crank group of figure 13 to highlight some technical characteristics;

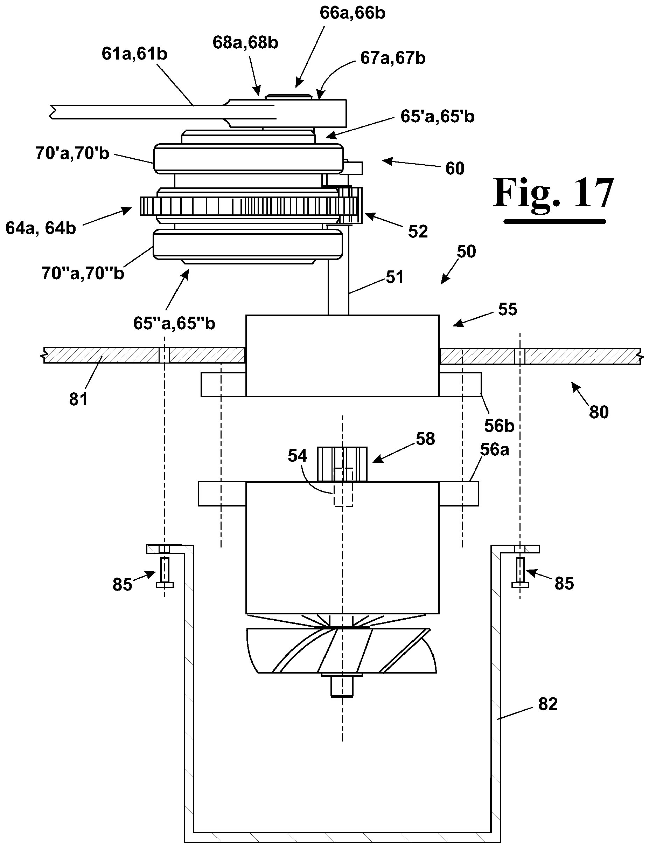

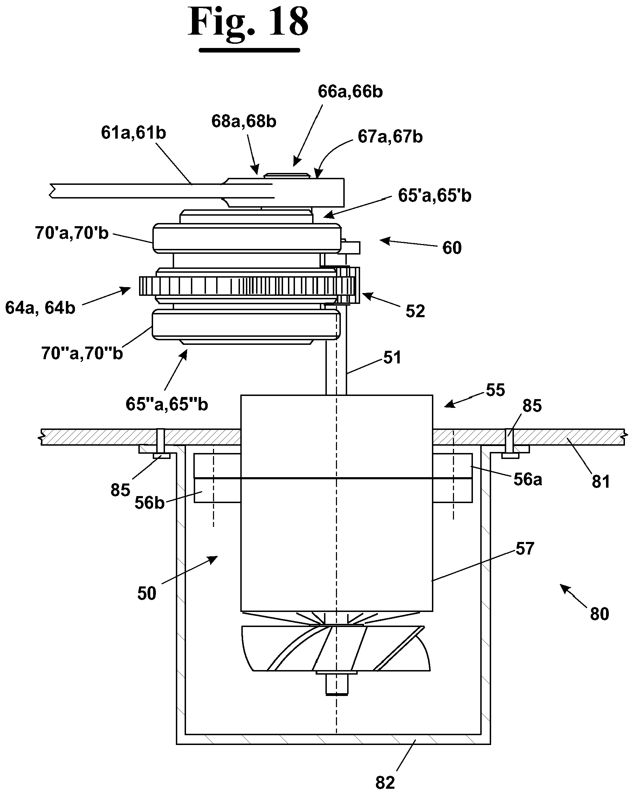

- Figures 17 and 18 diagrammatically show side elevation views, respectively in a disassembled configuration and in an assembled configuration of a further embodiment of the apparatus of figure 1.

### Detailed description of some exemplary embodiments of the invention

As diagrammatically shown in figure 1, an apparatus 1, according to the invention, for harvesting small fruits, in particular olives, almonds, pistachios, and similar fruits, comprises a manoeuvring pole 5 provided with at least one grasping portion 6, for example a first and a second grasping portion 6a and 6b, for the grasp of the manoeuvring pole 5 same by a user 200. According to a known embodiment, the manoeuvring pole 5 can have a telescopic arrangement formed by two, or more sections, which are telescopically mounted one with respect to the other.

The apparatus 1, furthermore, comprises a working head 2 having a support body 10, in particular provided with a protection carter to house the mechanical parts of the same. The apparatus 1, furthermore, comprises a first and a second oscillating comb-like member 20a and 20b operatively connected to the aforementioned support body 10. In particular, the first and second oscillating comb-like members 20a and 20b are positioned side by side, advantageously in such a way to have respective end surfaces 34a and 34b facing one towards the other.

In particular, the first and second oscillating comb-like members 20a and 20b are pivotally connected to the support body 10 at respective fulcrum points 23a and 23b. More precisely, the first and second oscillating comb-like members 20a and 20b comprise, respectively, a first and a second elongated base portion 30a and 30b provided, respectively, with a first and with a second plurality of harvesting rods 35a and 35b. A motor group 50 is, furthermore, provided comprising, for example, a brushless motor, operatively connected to the first and to the second oscillating comb-like member 20a and 20b by a motion transmission group 60. This, according to what is foreseen by the present invention, comprises a first and a second connecting rod member 61a and 61b having a respective first end 62a and 62b pivotally connected to a respective actuation portion 31a and 31b of one of the two elongated base portions 30a and 30b. Advantageously, the actuation portions 31a and 31b are arranged at end portions, respectively, of the elongated base portions 30a and 30b. The first and second connecting rod members 61a and 61b are, furthermore, provided with a respective second end 63a and 63b arranged to connect the same, respectively, to a first and to a second crank group 65a and 65b.

More precisely, the first and second crank groups 65a and 65b comprise, respectively, a first and a second toothed wheel 64a and 64b which rotate about a respective rotation axis 164a and 164b.

In particular, a first and a second eccentric pivot 66a and 66b are provided that are mounted, respectively, on the first and on the second crank group 65a and 65b in such a way to rotate integrally, respectively, to a first and a second toothed wheel 64a and 64b. More in particular, the first and the second eccentric pivot 66a and 66b are arranged to pivotally engage, respectively, a first and a second engagement hole 67a and 67b provided at the second ends 63a and 63b of the first and of the second connecting rod member 61a and 61b. In this way, during the rotation of the first and of the second toothed wheel 64a and 64b, the first ends 62a and 62b of the first and of the second connecting rod member 61a and 61b describe, respectively, a first and a second circular trajectory between a bottom dead point (Pmi) and a top dead point (Pms).

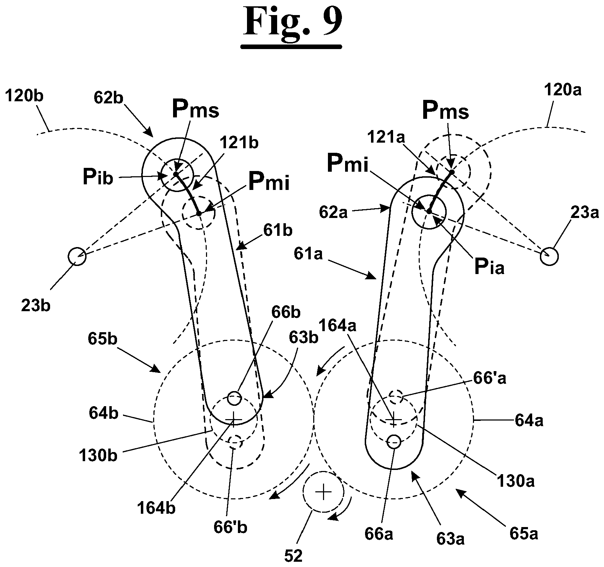

In particular, according to what is provided by the present invention, and shown in detail in figure 9, the first and second eccentric pivots 66a and 66b are mounted, respectively, on the first and on the second crank group 65a and 65b in positions such that when, during the motion of the pivots 66a and 66b respectively on the circular trajectories 130a and 130b, the first connecting rod member 61a causes the first hinge point Pia to be positioned at the respective top dead point Pms on the portion 121a of the first circular trajectory 120a, the second connecting rod member 61b causes the second hinge point Pib to be positioned at the respective bottom dead point Pmi on the portion 121b of the second circular trajectory 120b (situation that is shown with broken line in figure 9). The positions of the eccentric pivots 66a and 66b on the respective crank groups 65a and 65b are, then, such that, when, during their motion along the respective circular trajectories 130a and 130b, the first connecting rod member 61a causes the first hinge point Pia to be positioned at the respective bottom dead point Pmi on the portion 121a of the first circular trajectory 120a, and the second connecting rod member 61b causes the second hinge point Pib to be positioned at the respective top dead point Pms on the portion 121b of the second circular trajectory 120b (situation that is shown with continuous line in figure 9).

The positions of the first and of the second eccentric pivot 66a and 66b on the respective crank groups 65a and 65b, in particular the angular positions with respect to the respective rotation axes 164a and 164b of the toothed wheels 64a and 64b, are staggered with each other at a predetermined angle, for example comprised between 170° and 190°.

More precisely, as for example diagrammatically shown in the figures from 4 to 11, the aforementioned predetermined angle can be 180°, or about 180°, when the first ends 62a and 62b of the first and of the second connecting rod member 61a and 61b, or more precisely the first and second hinge points Pia and Pib of these to the respective oscillating comb-like members 20a and 20b, are arranged at the respective bottom dead point Pmi, and the other at the respective top dead point Pms.

In particular, the motor group 50 is provided with a motor shaft 51 on which a pinion 52 is mounted.

In a first embodiment foreseen by the invention, the aforementioned pinion 52 directly meshes with the first toothed wheel 64a of the first crank group 65a to directly transmit to the same the rotational motion of the motor shaft 51 and, therefore, the oscillating motion to the first comb-like member 20a by the first connecting rod member 61a. The first toothed wheel 64, then, meshes with the second toothed wheel 64b of the second crank group 65b in such a way to transmit the rotation motion to the same, but in the opposed direction of rotation. In this case, therefore, the first and second toothed wheels 64a and 64b are counter-rotating. Through the second connecting rod member 61b, the oscillating motion is, then, transmitted also to the second comb-like member 20b. More precisely, the first and second comb-like members 20a and 20b work in phase with each other, that means that during the shaking motion they both rotate now towards the right, and now towards the left.

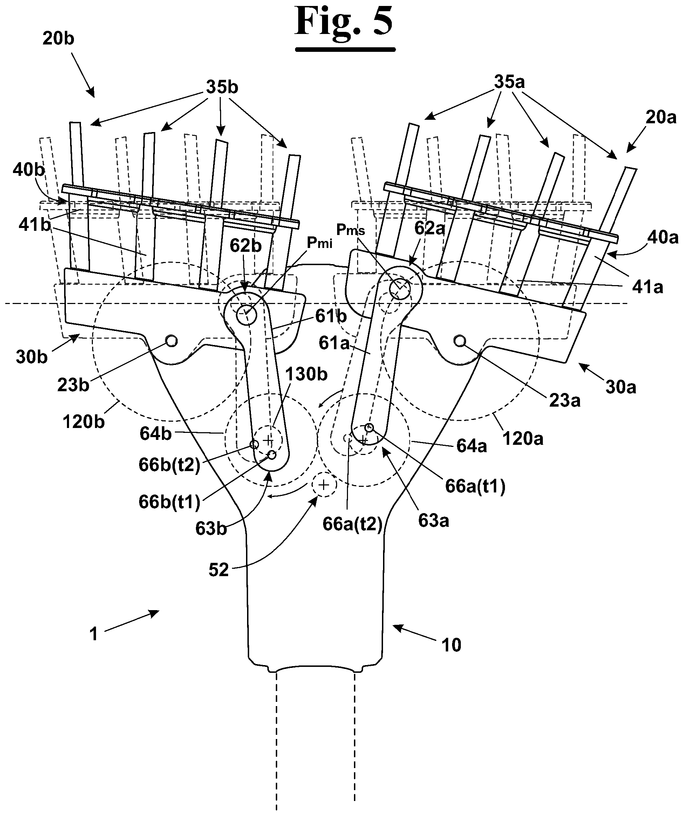

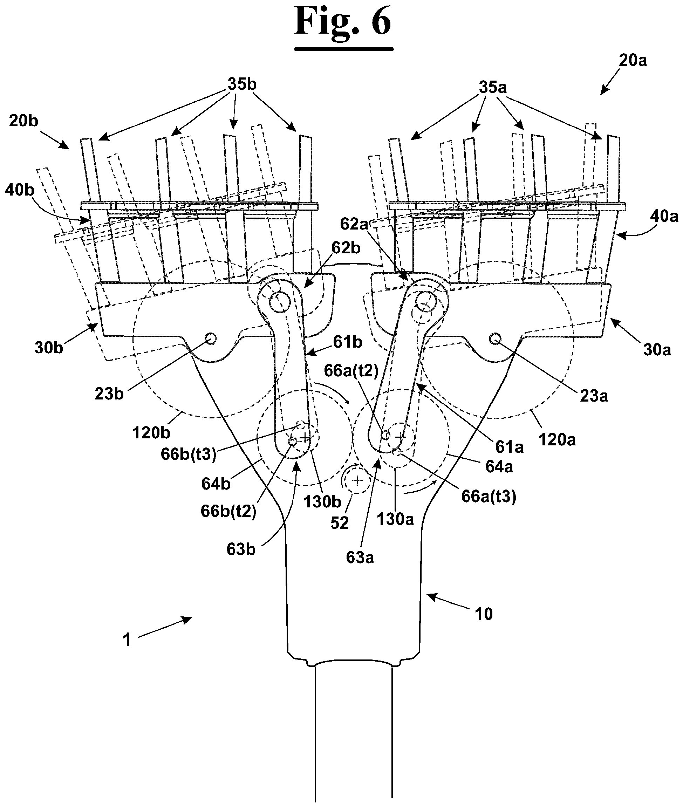

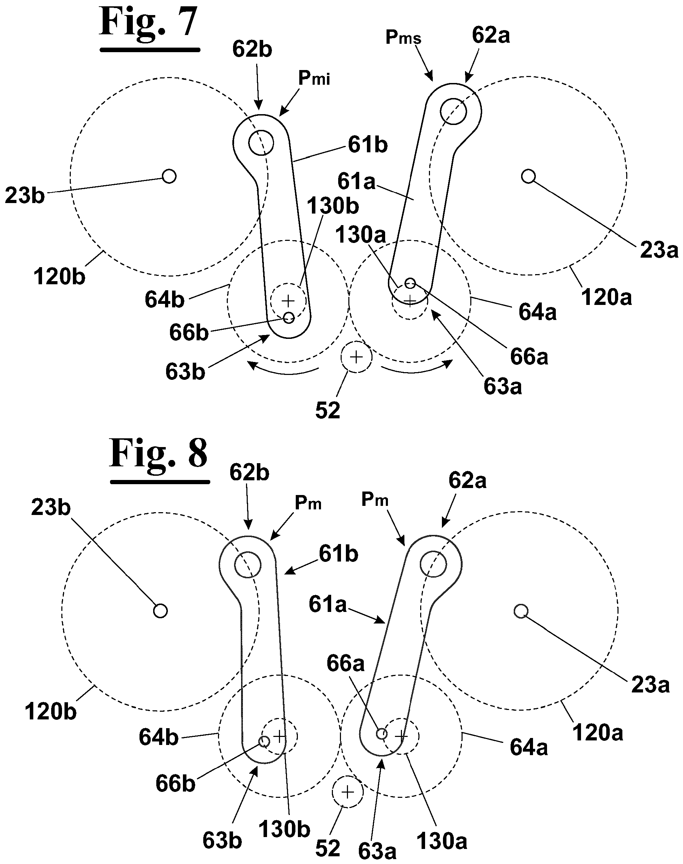

In particular, with reference to the figures 5 and 6, in the case that the first and second toothed wheels 64a and 64b are arranged to directly mesh one with the other and, therefore, are counter-rotating, during the rotation of the first and second toothed wheels 64a and 64b, the respective eccentric pivots 66a and 66b move, respectively, from positions 66a(t1) and 66b (t1) at instant t1 where the ends 62a and 62b of the connecting rod elements 61a and 61b are arranged, respectively, at the top dead point Pms and at the bottom dead point Pmi, to the positions 66a(t2) and 66b(t2) at which at instant t2 the ends 62a and 62b of the connecting rod elements 61a and 61b are, respectively, at respective midpoints Pm1 and Pm2. Going on with the rotation of the toothed wheels 64a and 64b, the eccentric pivots 66a and 66b move, then, at instant t3 in the positions 66a(t3) and 66b(t3) where the ends 62a and 62b of the connecting rod elements 61a and 61b are arranged, respectively, at the bottom dead point Pmi and at the top dead point Pms.

In the alternative embodiment of the invention that is diagrammatically shown in the figures 9 and 10, instead, both the first and the second toothed wheel 64a and 64b are arranged to directly mesh with the pinion 52. Therefore, in this case, the first and second toothed wheels 64a and 64b of the first and second crank groups 65a and 65b are arranged to rotate in the same direction of rotation. Also in this case, it is the eccentric position of the pivots 66a and 66b with respect to the crank groups 65a and 65b together with the particular solution that is adopted for the motion transmission group 60, to cause the comb-like members 20a and 20b to move "in phase" with each other.

The technical solution adopted by the present invention allows to reduce the overall stresses on the members for transmitting the movement, because they are at least in part balanced by the particular geometry that is adopted. Therefore, also the wear of the moving mechanical parts is reduced and, therefore, a considerable economic saving is obtained because their average life is considerably extended. In addition, the number of maintenance interventions is considerably reduced, in particular those for replacing the worn-out mechanical components.

Another advantage of the technical solution according to the present invention, in particular with respect to the solution described in EP2491782 which provides two connecting rod elements superimposed to each other and hinged to the same eccentric pivot, is to reduce the thickness of the support body 10 of the apparatus 1, and, therefore, to allow the user, on the one hand, to have a better view during working conditions, and, on the other hand, to guarantee a more accurate and reliable transmission of the movement.

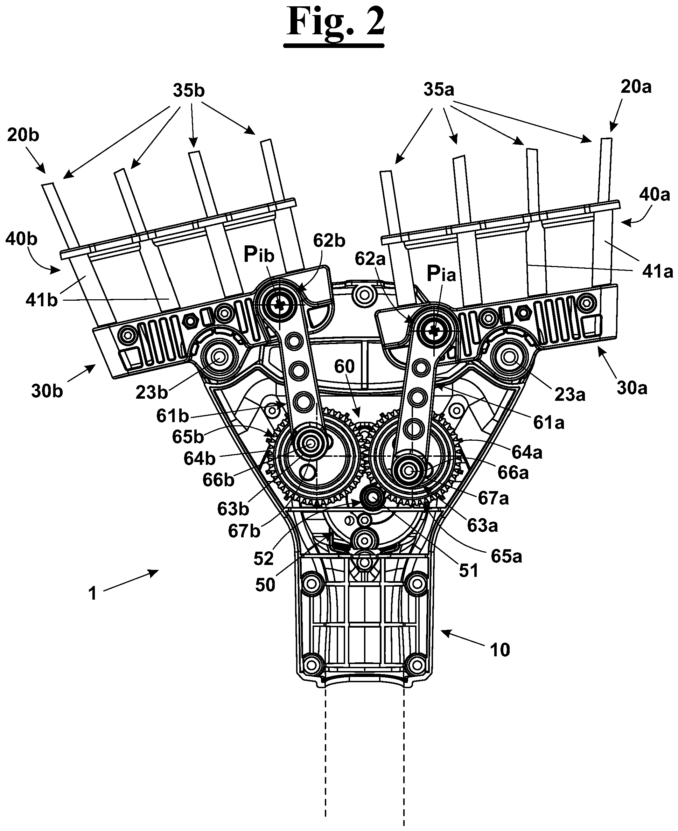

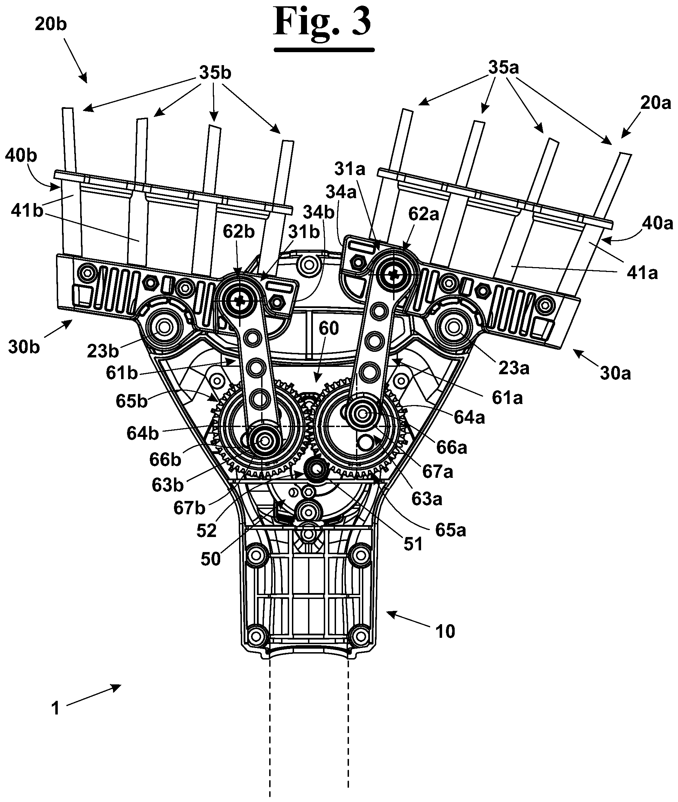

In particular, as diagrammatically shown in detail in the figures 2 and 3, in use, between the first eccentric pivot 66a and the second end 63a of the first connecting rod member 61a, that means at the first engagement hole 67a, and between the second eccentric pivot 66b and the second end 63b of the second connecting rod member 61, that means at the second engagement hole 67b, a first and a second auxiliary bearings 68a and 68b are, respectively, provided, in particular a first and a second smooth bearings, for example a first and a second plain bearing, or other element able to reduce the friction during the rotation.

In the further alternative embodiment of the invention that is diagrammatically shown in the figures 12 and 13 in two different working configurations, the actuation portions 31a and 31b of the first and of the second oscillating comb-like member 20a and 20b, are not made at the respective base portions 30a and 30b, as in the embodiments shown in the figures from 1 to 11, but are made at protruding portions 32a and 32b oriented orthogonally, or substantially orthogonally, to the respective elongated bases 30a and 30b. Also in the embodiment of figures 12 and 13, as well as in the embodiments described above with reference to the figures from 1 to 11, the eccentric pivots 66a and 66b are mounted on respective crank groups 65a and 65b at respective eccentric positions such that when the first hinge point Pia, i.e. the hinge point of the first connecting rod member 61a to the first oscillating comb-like member 20a, is positioned at the respective top dead point Pms on the portion 121a of the first circular trajectory 120a, the second hinge point Pib, i.e. the hinge point of the second connecting rod member 61b to the second oscillating comb-like member 20b, is positioned at the bottom dead point Pmi on the portion 121b of the second circular trajectory 120b and vice versa.

In a possible embodiment of the invention diagrammatically shown in the figures 13 and 14, the first and second crank groups 65a and 65b comprise a respective first part 65'a and 65'b, and a respective second part 65"a and 65"b. In particular, the first parts 65'a and 65'b and the second parts 65"a and 65"b are fixed, respectively to the first and to the second toothed wheel 64a and 64b, at opposite sides of these. More in particular, still with reference to figure 16, the first parts 65'a and 65'b are, respectively, provided with the first and the second eccentric pivot 66a and 66b. In particular, the first parts 65'a, 65'b are adapted to engage to the respective second parts 65"a, 65"b at respective flanged portions 69'a, 69'b and 69"a, 69"b, advantageously by fixing elements 75 such as screws, bolts, or similar fixing elements.

With reference to figure 14, the support body 10 can be, advantageously, provided with internal walls 11 and 12. These can be configured to separate the first and second connecting rod members 61a and 61b from the first and the second toothed wheel 64a and 64b without obstructing anyway the transmission of the motion by the motion transmission group. In this way, it is possible to avoid that fragments of the plant that subjected to shaking during the harvesting of small fruits can reach the same.

As diagrammatically shown for example in figure 16, both the first and the second parts 65'a, 65'b and 65"a, 65"b are configured to avoid that fragments of leaves of the plant, which is subjected to harvesting, or other foreign matters, or dust, can penetrate among the parts of the first and second crank groups 65a and 65b. In particular, both the first and the second parts 65'a, 65'b and 65"a, 65"b are configured to form a respective closed body. The possibility is, however, not excluded that the aforementioned closed bodies are provided with grooves, or lowered portions, not shown in the figures for simplicity, to make the component lighter, remaining, however, within the inventive concept described above. In this way, differently from the prior art solutions, it is possible to further reduce the number of maintenance operations that are necessary to assure that the apparatus 1, and, in particular, the toothed wheels 64a and 64b, is able to work in conditions of maximum efficiency. As diagrammatically shown in figure 6, for example, each of the aforementioned first and second parts 65'a, 65'b and 65"a, 65"b can comprise a respective flanged portion 69'a, 69'b, 69"a, and 69"b from which a protruding portion 76'a, 76'b, 76"a, and 76"b, for example substantially cylindrical, or substantially conical, is adapted to protrude. In particular, the protruding portions 76'a, 76'b, 76"a, and 76"b have a width, or diameter, smaller than the respective flanged portion 69'a, 69'b, 69"a, and 69"b.

Still with reference to the figures 13 and 14, the first parts 65'a and 65'b and the second parts 65"a and 65"b of the crank groups 65a and 65b are associated to respective bearings 70'a and 70'b, and 70"a, 70"b. Advantageously, the bearings 70'a, 70'b and 70"a, 70"b can be positioned at opposite sides of the first and second toothed wheels 64a and 64b with respect to a respective flanged portion 69'a, 69'b and 69"a, 69"b of the first and second parts 65'a, 65'b and 65"a, 65"b.

More in particular, the first and second crank groups 65a and 65b are, respectively, provided with a first and a second eccentric pivot 66a and 66b, adapted to pivotally engage with each other respectively in a first and in a second engagement hole 67a and 67b provided at the second ends 63a and 63b of the first and of the second connecting rod member 61a and 61b. Advantageously, the first parts 65'a, 65'b and 65"a, 65"b of the first and of the second crank group 65a and 65b are, respectively, provided with the first and with the second eccentric pivot 66a and 66b.

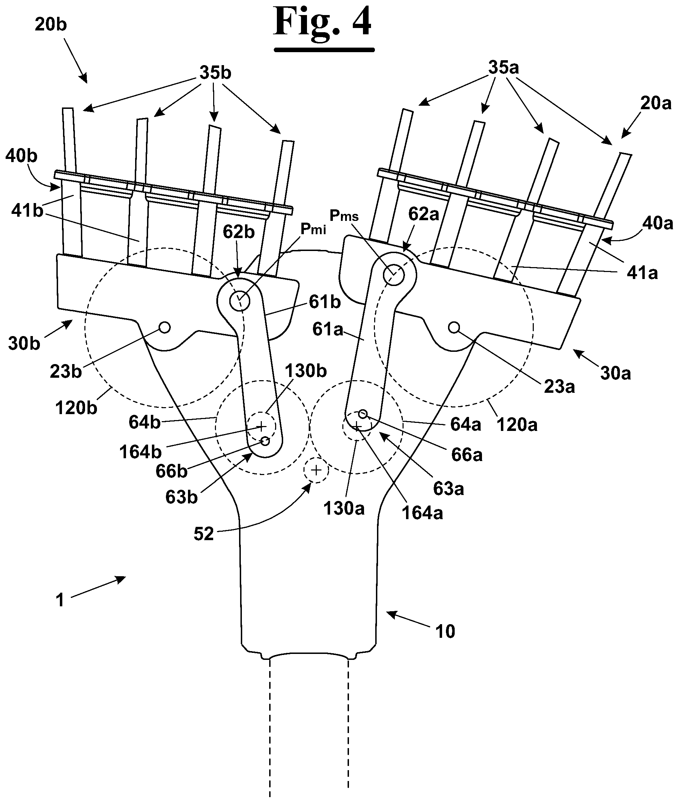

As for example shown in figure 16, in a possible embodiment of the invention, the first and second comb-like members 20a and 20b comprise, respectively, a first and a second directional body 40a and 40b. In particular, the first and second directional bodies 40a and 40b can provide, respectively, a first and a second plurality of tubular bodies 41a and 41b. Advantageously, each tubular body 41a is connected to a following tubular body 41b, by a connection member 42a and 42b, in particular a connection rod, preferably a transversal connecting rod. More precisely, each tubular body 41a and 41b is adapted to house and direct along a predetermined direction a respective rod 35a and 35b. As for example shown in figure 4, the first and second pluralities of tubular bodies 41a and 41b are adapted to be engaged, respectively, to the first and to the second oscillating comb-like member 20a and 20b, in particular at respective engagement apertures 43a and 43b.

As diagrammatically shown in the figures 17 and 18, respectively in a disassembled configuration and in an assembled configuration, the motor group 50 can comprise a speed reducer 55, in particular a planetary, or epicycloidal reducer, to the outlet of which the aforementioned motor shaft 51 is connected, and to the inlet of which a supplementary motor shaft 54 of a motor 57, for example an electric motor, is connected. In the case that is diagrammatically shown in figure 17, the auxiliary motor shaft 54 can end with a supplementary pinion 58 arranged to removably mesh with the gears of the aforementioned speed reducer 55, in such a way to obtain a predetermined reduction ratio. More in particular, the motor 57 and the speed reducer 55 are configured to removably engage with each other at respective flanged portions 56a, and 56b, for example by screws, bolts or similar disassemblable engagement elements, in such a way to move between an assembled configuration and a disassembled configuration.

In particular, the speed reducer 55 can be housed within a first portion 81 of a protection carter 80 within which are housed other motion transmission components. Instead, the motor 57 provided with the aforementioned supplementary motor shaft 54 is housed externally to the aforementioned first portion 81 of the protection carter 80 and internally to a second portion 82 arranged to removably engage the aforementioned first portion 81, in particular by engagement elements 85 that can be disassembled, for example screws, bolts, and similar. Therefore, it is possible to reach the aforementioned motor 57 simply disengaging the second portion 82 from the first portion 81 of the protection carter 80, and removing the motor 57 and the supplementary motor shaft 54, disengaging the aforementioned flanged portions 56a and 56b.

In this way, it is possible to easily and quickly disassemble and/or assemble the motor 57 and the supplementary motor shaft 54 from/to the speed reducer 55 in order to, in case, replace or to subject them to maintenance operations. In particular, the aforementioned epicycloidal reducer can be provided with a planetary gear, not shown in the figure for simplicity but of known type, and wherein the aforementioned supplementary pinion is arranged to mesh with said planetary gear in the assembled configuration.

Even though the technical solution described above with reference to the figures 17 and 18 is foreseen associated to the transmission group of the apparatus 1, according to the invention, it is, anyway, foreseen that the same can be used also for prior art apparatuses 1 provided with different transmission groups, for example apparatuses of the type described in EP4225012, EP4210465, EP4208007, EP3430883 and EP2491782.

The foregoing description exemplary embodiments of the invention will so fully reveal the invention according to the conceptual point of view, so that others, by applying current knowledge, will be able to modify and/or adapt for various applications such embodiment without further research and without parting from the invention, and, accordingly, it is therefore to be understood that such adaptations and modifications will have to be considered as equivalent to the specific embodiments. The means and the materials to realize the different functions described herein could have a different nature without, for this reason, departing from the field of the invention. It is to be understood that the phraseology or terminology that is employed herein is for the purpose of description and not of limitation.

## Claims

1. An apparatus (1) for harvesting small fruits, in particular olives, almonds, pistachios and similar small fruits, said apparatus (1) comprising:
- a manoeuvring pole (5) provided with at least a grasping portion (6) at which a user is adapted to grasp said manoeuvring pole (5);
- a support body (10);
- a first and a second oscillating comb-like member (20a,20b) pivotally connected to said support body (10) at respective fulcrum points (23a,23b), said first and second oscillating comb-like members (20a,20b) being positioned side by side with each other and comprising, respectively, a first and a second elongated base portion (30a,30b) provided, respectively, with a first and with a second plurality of shaking rods (35a,35b);
- a motor group (50) comprising a motor shaft (51) on which a pinion (52) is mounted that is operatively connected to said first and to said second oscillating comb-like member (20a,20b) by a motion transmission group (60) arranged to cause a rotation about said respective fulcrum point (23a,23b) and comprising a first and a second connecting rod member (61a,61b) having a respective first end (62a,62b) pivotally connected, respectively at a first and at a second hinge point (Pia,Pib), to a respective actuation portion (31a,31b) of said elongated base portion (30a,30b), and a respective second end (63a,63b) arranged to connect said first and second connecting rod members (61a,61b), respectively, to a first and to a second crank group (65a,65b), said first and second crank groups (65a,65b) comprising, respectively:
- a first and a second toothed wheel (64a,64b) arranged to rotate about a respective rotation axis (164a, 164b);
- a first and a second eccentric pivot (66a,66b) mounted, respectively, on said first and on said second crank group (65a,65b) in such a way to rotate integrally with said first and con said second toothed wheel (64a,64b) about said rotation axes (164a,164b) along respective circular trajectories (130a,130b), said first and second eccentric pivots (66a,66b) being arranged to pivotally engage with each other, respectively, in a first and in a second engagement hole (67a,67b) provided at said second ends (63a,63b) with said first and with said second connecting rod member (61a,61b), in such a way that during the rotation of said first and second toothed wheels (64a,64b) said first ends (62a,62b) of said first and of said second connecting rod member (61a,61b) are adapted to move on a portion (121a,121b), respectively, of a first and of a second circular trajectory (120a,120b), between a respective bottom dead point (Pmi) and a respective top dead point (Pms);
said apparatus (1) being **characterised in that** said first and second eccentric pivots (66a,66b) are mounted, respectively, on said first and on said second crank group (65a,65b), at respective positions such that when said first hinge point (Pia) of said first connecting rod member (61a) is positioned at said top dead point (Pms) of said portion (121a) of said first circular trajectory (120a), said second hinge point (Pib) of said second connecting rod member (61b) is positioned at said bottom dead point (Pmi) on said portion (121b) of said second circular trajectory (120b) and vice versa.

2. Apparatus (1) for harvesting small fruits according to claim 1, wherein said positions of said first and of said second eccentric pivot (66a,66b) respectively on said first and on said second crank group (65a,65b) are staggered with each other at a predetermined angle comprised between 170° and 190°.

3. Apparatus (1) for harvesting small fruits according to claim 2, wherein said predetermined angle is 180° when one between said first and second hinge points (Pia,Pib) is positioned at the respective bottom dead point (Pmi), and the other at the respective top dead point (Pms).

4. Apparatus (1) for harvesting small fruits according to any previous claim, wherein said first toothed wheel (64a) is arranged to directly mesh with said pinion (52) and wherein said first and said second toothed wheel (64b) are arranged to directly mesh one with the other, in such a way to be counter-rotating.

5. Apparatus (1) for harvesting small fruits according to any claim from 1 to 3, wherein both said first and said second toothed wheel (64a,64b) are arranged to directly mesh with said pinion (52) whereby said first and second toothed wheels (64a,64b) of said first and of said second crank group (65a,65b) are arranged to rotate in the same direction of rotation.

6. Apparatus (1) for harvesting small fruits according to any previous claim, wherein between said first eccentric pivot (66a) and said second end (63a) of said first connecting rod member (61a) and between said second eccentric pivot (66b) and said second end (63b) of said second connecting rod member (61b) are, respectively, provided a first and a second auxiliary bearing (68a,68b).

7. Apparatus (1) for harvesting small fruits according to any previous claim wherein each said first and second crank groups (65a,65b) comprises a first part (65'a,65'b) and a second part (65"a,65"b) fixed at opposite sides to said first and to said second toothed wheel (64a,64b), said first parts (65'a,65'b) and said second parts (65"a,65"b) being fixed at opposite sides, respectively, to said first and to said second toothed wheel (64a,64b) by a plurality of fixing elements (75).

8. Apparatus (1) for harvesting small fruits according to claim 7 wherein each said first part (65'a,65'b) is connected to said respective second part (65"a,65"b) of said first and second crank groups (65a,65b) at respective flanged portions (69'a,69'b;69"a,69"b) and wherein said first and second parts (65'a,65'b; 65"a,65"b) form together a closed body configured to avoid that dusts, or other foreign matters, can penetrate among the parts of said first and second crank groups (65a,65b).

9. Apparatus (1) for harvesting small fruits according to claim 8, wherein said first parts (65'a,65'b) are arranged to engage said respective second parts (65"a,65"b) at said respective flanged portions (69'a,69'b; 69"a,69"b) by fixing elements (75), and wherein protruding portions (76'a,76'b, 76"a,76"b) are provided arranged to protrude, respectively, from said flanged portions (69'a,69'b, 69"a,69"b) of said first parts (65'a,65'b) and of said second parts (65"a,65"b) .

10. Apparatus (1) for harvesting small fruits according to any previous claim, wherein said support body (10) is provided with internal walls (11,12) configured to separate said first and second connecting rod members (61a,61b) from said first and said second toothed wheel (64a,64b), without obstructing anyway said motion transmission group (60), in such a way to avoid that fragments of plant subjected to shaking motion during the harvesting of the small fruits can reach the same.

11. Apparatus (1) for harvesting small fruits according to claim 7 wherein said first parts (65'a,65'b; 65"a,65"b) of said first and second crank groups (65a,65b) are respectively provided with said first and with said second eccentric pivot (66a,66b).

12. Apparatus (1) for harvesting small fruits according to any previous claim, wherein said motor group (50) comprises a speed reducer (55) which has said motor shaft (51) connected at the outlet side, and a supplementary motor shaft (54) of a motor (57) connected at the inlet side, and wherein said motor (57) and said speed reducer (55) are configured to removably engage to each other at respective flanged portions (56a,56b), in such a way that said motor (57) can be easily and quickly disassembled and/or assembled.

13. Apparatus (1) for harvesting small fruits according to claim 12, wherein said speed reducer (55) is housed within a first portion (81) of a protection carter (80), wherein said motor (57) is housed externally to said first portion (81) of said protection carter (80) and internally to a second portion (82) of said protection carter (80) arranged to removably engage said first portion (81).

14. Apparatus (1) for harvesting small fruits according to claim 12, or 13, wherein said speed reducer (55) is an epicycloidal reducer provided with a planetary gear, and wherein said supplementary motor shaft (54) is provided at an end of a supplementary pinion (58) configured to removably mesh with said planetary gear of said epicycloidal reducer (55).

15. Apparatus (1) for harvesting small fruits according to any previous claim, wherein said first and second oscillating comb-like members (20a,20b) comprise respectively a first and a second directional body (40a,40b) comprising, respectively, a first and a second plurality of tubular bodies (41a,41b) operatively connected by a plurality of connection rods (42a,42b), each tubular body (41a,41b) being arranged to house and oriented along a predetermined direction a respective rod (35a,35b), said first and second pluralities of tubular bodies (41a,41b) being arranged to be engaged, respectively, to said first and to said second oscillating comb-like member (20a,20b).
